(19) Europäisches Patentamt / European Patent Office / Office européen des brevets

(11) **EP 2 596 298 B1**

(12) **FASCICULE DE BREVET EUROPEEN**

(45) Date de publication et mention
de la délivrance du brevet:
**04.06.2014 Bulletin 2014/23**

(21) Numéro de dépôt: **11743879.6**

(22) Date de dépôt: **11.07.2011**

(51) Int Cl.:
***F25B 9/14*** *(2006.01)*     ***F25B 9/00*** *(2006.01)*
***F25B 49/02*** *(2006.01)*

(86) Numéro de dépôt international:
**PCT/IB2011/053086**

(87) Numéro de publication internationale:
**WO 2012/011017 (26.01.2012 Gazette 2012/04)**

(54) **PROCÉDÉ DE RÉGULATION D'UN RÉFRIGÉRATEUR CRYOGÉNIQUE**

VERFAHREN ZUR STEUERUNG EINES TIEFTEMPERATURKÜHLSCHRANKS

METHOD FOR CONTROLLING A CRYOGENIC REFRIGERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.07.2010 FR 1003044**

(43) Date de publication de la demande:
**29.05.2013 Bulletin 2013/22**

(73) Titulaire: **Commissariat à l'Énergie Atomique
et aux Énergies Alternatives
75015 Paris (FR)**

(72) Inventeurs:
 • **ALAMIR, Mazen
   F-38400 Saint Martin D'heres (FR)**
 • **BONNAY, Patrick
   F-38500 VOIRON (FR)**
 • **CLAVEL, Fanny
   F-38450 Vif (FR)**

(74) Mandataire: **Reboussin, Yohann Mickaël Noël et al
Cabinet Orès
36, rue de St Pétersbourg
75008 Paris (FR)**

(56) Documents cités:
**WO-A2-2009/024705      GB-A- 2 427 714
JP-A- 1 150 756          JP-A- 2005 003 314
JP-A- 2008 153 579**

**Description**

La présente invention se rapporte au domaine de la réfrigération d'installations.

La présente invention se rapporte en particulier à la réfrigération cryogénique d'installations.

La présente invention se rapporte encore à la réfrigération cryogénique d'installations susceptibles de fonctionner selon un régime instationnaire.

Un régime de fonctionnement instationnaire peut être rencontré dans de nombreuses applications.

C'est par exemple le cas des installations mettant en oeuvre des champs magnétiques intenses.

Un exemple d'installation mettant en oeuvre des champs magnétiques intenses est le tokamak. Le tokamak est une chambre de confinement magnétique destinée à contrôler un plasma pour étudier la possibilité de produire de l'énergie par fusion nucléaire.

Dans les tokamaks, on peut rencontrer un régime de fonctionnement instationnaire pulsé. Dans ce cas, si l'on connaît globalement le profil des charges pulsées imposées au réfrigérateur, on ne sait pas exactement quand une impulsion de charge advient. De plus, d'autres perturbations imprévisibles peuvent advenir, lesquelles sont liées au fonctionnement du tokamak.

Pour générer des champs magnétiques intenses, sans provoquer la destruction des électroaimants, on utilise des électroaimants supraconducteurs. Le fonctionnement supraconducteur d'un électroaimant nécessite un maintien de sa température au-dessous de sa température critique.

Ceci est obtenu grâce à un réfrigérateur cryogénique, par exemple refroidi par hélium.

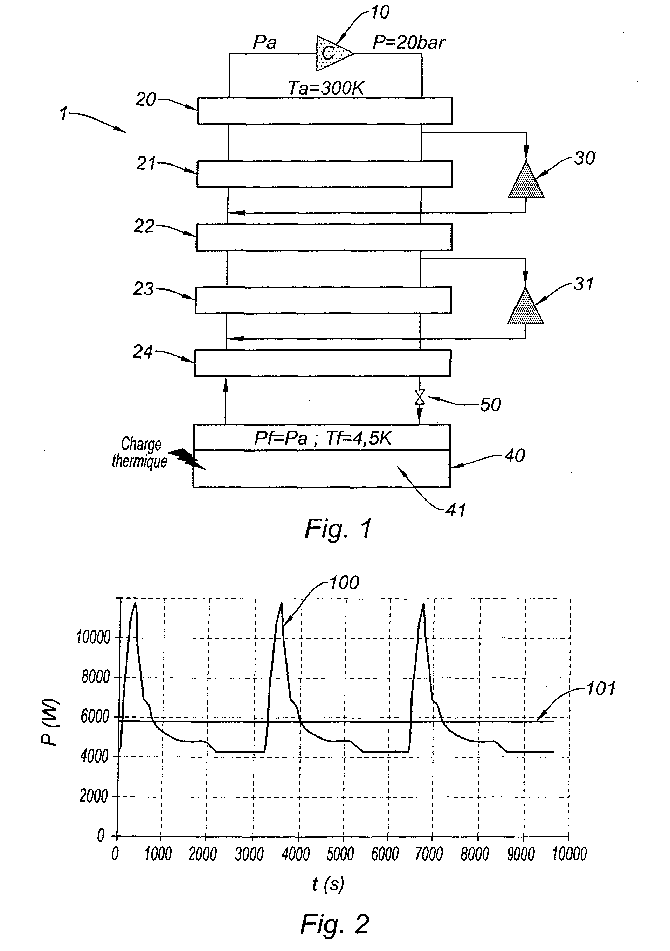

La figure 1 est un schéma représentatif du fonctionnement d'un tel réfrigérateur cryogénique.

Le réfrigérateur cryogénique 1 comprend un compresseur 10 permettant de comprimer un gaz à température ambiante ($T_0$ = 300K environ), en l'occurrence de l'hélium, depuis la pression atmosphérique $P_a$ à une pression P de 20 bar environ.

Plusieurs échangeurs thermiques 20, 21, 22, 23, 24 sont disposés en parallèle jusqu'à un séparateur de phase 40 comportant un bain d'hélium liquide à la température $T_f$ = 4,5K. Dans le cas d'espèce, cinq échangeurs thermiques sont prévus.

Ces échangeurs thermiques, à contre-courant, permettent de diminuer petit à petit la température de l'hélium circulant dans les différents circuits de ces échangeurs thermiques. Par ailleurs, pour chaque échangeur thermique, la pression des deux circuits d'échange de l'échangeur diffère, de sorte que le circuit « amont » est un circuit à haute pression et chaud et le circuit « aval » est un circuit à basse pression, plus froid. Entre le circuit « amont» lié au premier échangeur thermique 20 et le circuit « aval» du dernier échangeur thermique 24, la pression passe ainsi de P = 20 bar en sortie du compresseur à une pression légèrement supérieure à la pression atmosphérique, pour éviter des problèmes de cavitation en basse pression.

Le bain 41 d'hélium liquide est donc à la pression atmosphérique.

Le réfrigérateur cryogénique 1 comprend également plusieurs moyens pour extraire un travail.

Dans le cas présent, ces moyens sont formés par deux turbines 30, 31.

La première turbine 30 prélève du travail à la sortie du circuit basse pression du premier échangeur thermique 20 et réinjecte ce travail à l'entrée basse pression du deuxième échangeur thermique 21. La deuxième turbine 31 prélève du travail à la sortie du circuit basse pression du troisième échangeur thermique 22 et réinjecte ce travail à l'entrée basse pression du quatrième échangeur thermique 23.

Ces turbines 30, 31 sont complémentaires aux échangeurs thermiques et participent, par le prélèvement d'un travail, au refroidissement de l'hélium.

Le réfrigérateur cryogénique 1 comprend enfin une vanne 50 Joule-Thomson, disposée entre la sortie du circuit basse pression du dernier échangeur thermique 24 et le bain 41 d'hélium liquide à 4,5K sous pression atmosphérique. Cette vanne 50 permet de liquéfier l'hélium gazeux obtenu en sortie du circuit basse pression du dernier échangeur thermique 24 en effectuant une détente s'accompagnant d'une chute de température de l'hélium.

Le bain 41 d'hélium liquide permet alors de fournir une puissance frigorifique pour maintenir les électroaimants de l'installation à champs magnétiques intenses, par exemple un tokamak, en fonctionnement supraconducteur, compte tenu de la puissance thermique imposée par l'installation à ce bain 41 d'hélium liquide.

La puissance thermique imposée par l'installation au bain 41 d'hélium liquide est également appelée charge thermique.

Ce type de réfrigérateur est conçu et dimensionné pour un fonctionnement en régime stable ou lentement variable du champ magnétique intense généré par l'installation, c'est-à-dire pour un régime de fonctionnement thermique permanent ou quasi-permanent du réfrigérateur.

En effet, ces régimes de fonctionnement de l'installation permettent d'obtenir une charge thermique stable au niveau du réfrigérateur cryogénique. Le fonctionnement en régime thermique permanent ou quasi-permanent du réfrigérateur cryogénique permet d'assurer un refroidissement adéquat des électroaimants, de façon stable et sûre.

Cependant, les futures installations visant à étudier la possibilité de production d'énergie par fusion nucléaire activée par des champs magnétiques intenses prévoient de mettre en oeuvre des champs magnétiques pulsés.

C'est le cas des projets de tokamaks ITER (France) et JT60_SA (Japon).

Les variations du champ magnétique dans le tokamak impliquent alors une variation similaire de la charge thermique imposée au réfrigérateur cryogénique.

Un exemple de l'évolution de la charge thermique imposée au réfrigérateur cryogénique sur le futur tokamak japonais JT60_SA, destiné à fonctionner en régime pulsé, est représenté sur la figure 2. On note que les impulsions sont a priori périodiques, dans le cas d'espèce selon une période de 3000s, la durée d'une impulsion étant environ de 100s. Il n'en reste pas moins que des processus aléatoires peuvent altérer cette évolution, comme cela été présenté précédemment.

Sur cette figure 2, on peut constater que le régime de fonctionnement pulsé du tokamak imprime un régime de fonctionnement également pulsé (courbe 100) de la charge thermique imposée au réfrigérateur cryogénique. Cette figure 2 représente également (courbe 101) la charge thermique moyenne imposée par le tokamak au réfrigérateur.

Or, les réfrigérateurs cryogéniques utilisés sur les installations existantes ne sont pas adaptés pour assurer, dans ce régime pulsé, un refroidissement adapté.

En effet, une augmentation de la charge thermique entraîne une augmentation du débit d'hélium refroidi, en retour vers les électroaimants de l'installation.

Ceci refroidit l'ensemble du réfrigérateur, car le froid apporté par la charge thermique déséquilibre les échangeurs 20, 21, 22, 23 et 24 entre la partie haute pression et la partie basse pression. De plus, l'évaporation provoquée par la charge sur le bain d'hélium augmente instantanément le débit de retour côté basse pression de chaque échangeur thermique, ce qui déséquilibre tout le réfrigérateur cryogénique. Une augmentation conséquente de la charge thermique peut même conduire à l'arrêt complet du réfrigérateur cryogénique.

Pour remédier à ce problème, il a déjà été proposé de lisser l'impact du champ magnétique pulsé sur l'évolution de la charge thermique imposée au réfrigérateur cryogénique.

Ce lissage consiste à limiter les variations de la charge thermique réellement imposée au réfrigérateur cryogénique, pour assurer un fonctionnement nominal du réfrigérateur cryogénique et par suite, éviter notamment tout arrêt du réfrigérateur.

A cet effet, il a été proposé d'agir de façon mécanique et/ou de façon thermique, soit en installant des moyens dédiés à l'intérieur du réfrigérateur cryogénique, soit en installant un dispositif additionnel entre l'installation mettant en oeuvre des champs magnétiques intenses et son réfrigérateur cryogénique.

Par exemple, le document Dauguet & al., Advances in Cryogenic Engineering : Transactions of the Cryogenic Engineering Conference, CEC Vol. 53, edited by J.G. Weisend II, pp. 564-569 propose de maintenir une charge thermique constante sur le réfrigérateur cryogénique.

Pour cela, le réfrigérateur cryogénique comporte de nombreux échangeurs thermiques et vannes cryogéniques activées afin que la puissance frigorifique délivrée par le réfrigérateur reste stable, à une valeur correspondant à une charge thermique moyenne imposée par le tokamak. Ainsi, le réfrigérateur cryogénique fonctionne selon un régime permanent ou quasi-permanent, même en présence d'un régime en fonctionnement pulsé du tokamak.

Une solution voisine est proposée dans le document WO 2009/024705.

Selon un autre exemple, le document ″Design of the ITER-FEA T cryoplant to achieve stable operation over a wide range of experimental parameters and operation scenarios", Claudet & al., Fusion Engineering and Design 58-59 (2001), pp. 205-209 propose d'installer un dispositif intermédiaire entre le tokamak et le réfrigérateur cryogénique.

Ce dispositif permet d'effectuer une dérivation, en amont du réfrigérateur, d'une partie du débit d'hélium supplémentaire obtenu lors d'un pic de la charge thermique imposée au réfrigérateur cryogénique. Ainsi, le réfrigérateur cryogénique ne voit pas l'augmentation de débit d'hélium liée au régime de fonctionnement pulsé du tokamak.

Les solutions proposées sont basées sur des dispositifs mécaniques et/ou thermiques visant à lisser la variation de charge thermique susceptible d'être imposée au réfrigérateur cryogénique.

Ces solutions fonctionnent correctement.

Toutefois, elles nécessitent un complément d'installation (échangeurs thermiques, vannes,...) qui peut rapidement s'avérer coûteux et, parfois, délicat à mettre en oeuvre.

Un objectif de l'invention est de résoudre l'un au moins des inconvénients des réfrigérateurs cryogéniques existants.

Un autre objectif est de résoudre l'un au moins des inconvénients des réfrigérateurs cryogéniques existants, lorsque l'installation à réfrigérer fonctionne selon un régime instationnaire.

Comme cela a déjà été déjà mentionné précédemment, un régime instationnaire peut être rencontré dans de nombreux domaines. En conséquence, l'invention ne saurait être limitée aux installations générant un champ magnétique intense, pulsé, tel qu'un tokamak, mais peut s'étendre à tous types d'installations prévoyant une réfrigération cryogénique.

Pour atteindre l'un au moins de ces objectifs, l'invention propose un procédé de régulation d'un réfrigérateur cryogénique selon la revendication 1.

Le procédé selon l'invention pourra prévoir d'autres caractéristiques techniques, prises seules ou en combinaison:

- la charge thermique imposée au réfrigérateur cryogénique est une charge thermique instationnaire ;
- la charge thermique instationnaire imposée au réfrigérateur cryogénique est pulsée ;
- il est prévu une étape de détermination des variables pertinentes du réfrigérateur cryogénique représentant l'évolution de la dérivée temporelle de la hauteur du bain de liquide frigorifique dans le séparateur de phase, préalablement à l'étape d'estimation de la charge thermique avec le programme mis en oeuvre par ordinateur ;
- le réfrigérateur cryogénique comprenant une vanne à l'entrée du séparateur de phase, lesdites variables pertinentes comprennent au moins le degré d'ouverture de la vanne, la température en amont de la vanne et leurs dérivées temporelles respectives ainsi que la charge thermique ;
- le programme mis en oeuvre par ordinateur comprend une étape dans laquelle on filtre les données relatives à l'évolution de la dérivée temporelle de la hauteur du bain de liquide frigorifique dans le séparateur de phase.

Le procédé de régulation selon l'invention pourra aussi prévoir d'autres caractéristiques techniques, en particulier:

- une étape dans laquelle la régulation est réalisée en modifiant le degré d'ouverture de la vanne du réfrigérateur, située à l'entrée du séparateur de phase.

D'autres caractéristiques, buts et avantages de l'invention seront énoncés dans la description détaillée ci-après faite en référence aux figures suivantes :

- la figure 3 est un schéma représentant un bilan de masse réalisé sur le séparateur de phase du réfrigérateur cryogénique, par exemple illustré sur les figures 1 ou 4;
- la figure 4 est un schéma d'un réfrigérateur cryogénique portant le nom de « station 800W@4.5K » installé au Commissariat à l'Energie Atomique, sur lequel le procédé selon l'invention a été testé et validé ;
- la figure 5 est un graphique représentant d'une part, l'évolution de la charge thermique réellement imposée au réfrigérateur cryogénique représenté sur la figure 4 lors d'un essai et, d'autre part, l'évolution de la charge thermique estimée par le procédé conforme à l'invention.

Le procédé comprend notamment une étape d'estimation de la charge thermique w imposée au réfrigérateur 1, 1' cryogénique avec un programme mis en oeuvre par ordinateur.

L'élaboration de ce programme est détaillée ci-après.

Ce programme s'appuie notamment sur un bilan de conservation de la masse effectué sur le séparateur de phase 40, 40' du réfrigérateur 1, 1' cryogénique.

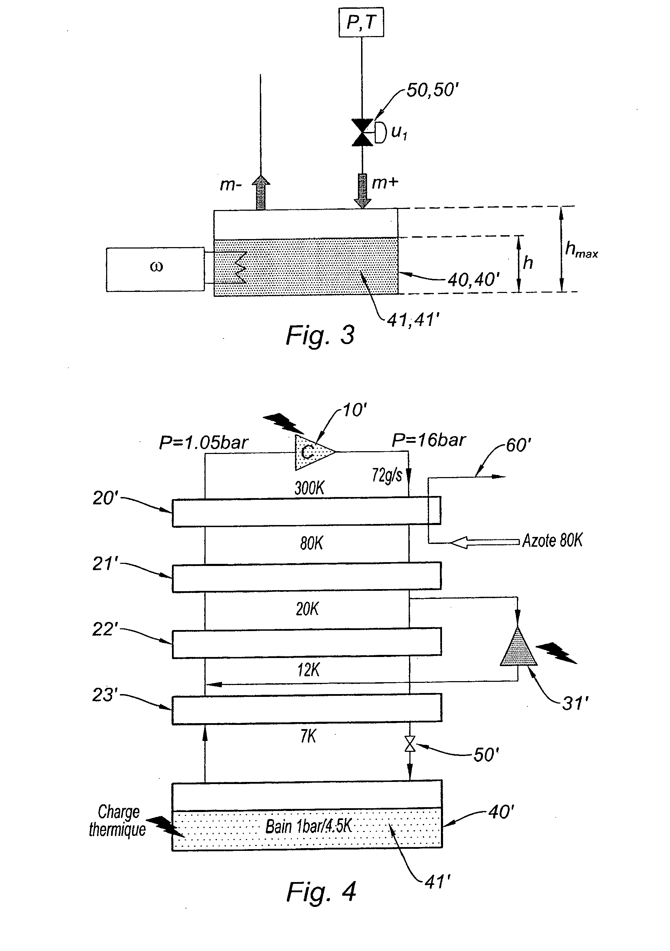

Ce bilan de masse effectué sur le séparateur de phase 40, 40' est schématisé sur la figure 3. Typiquement, il s'agit d'un séparateur de phase 40, 40' tel que représenté sur les figures 1 ou 4 respectivement, lequel comporte un bain 41, 41' de liquide frigorifique, par exemple de l'hélium.

L'équation de conservation de la masse sur le séparateur de phase 40, 40' s'écrit :

$$\frac{dh}{dt} = m_+ - m_- = f(u_1, P, T) - \frac{w}{L_v} \qquad \text{(Eq. 1)}$$

où :

h est la hauteur du bain de liquide frigorifique 41, 41' dans le séparateur de phase 40, 40' (% de la hauteur maximale $h_{max}$ atteignable dans le bain);

$m_+$, le débit de gaz entrant dans le séparateur de phase (g/s);

$m_-$, le débit de gaz sortant du séparateur de phase (g/s);

w, la charge thermique imposée au séparateur de phase, c'est-à-dire au réfrigérateur, par l'installation (W);

$u_1$, le degré d'ouverture de la vanne 50, 50' (%) ;

$L_v$, la chaleur latente de vaporisation (J/g) ; et

$f(u_1, P, T)$ une fonction dépendant du degré d'ouverture $u_1$ de la vanne 50, 50', de la pression P en amont de la vanne et de la température T en amont de cette vanne.

La fonction f(u$_1$, P, T) peut prendre différentes formes développées, en fonction de la précision souhaitée sur l'estimation de la dérivée temporelle $\dfrac{dh}{dt}$ de la hauteur h du liquide de refroidissement dans le séparateur de phase 40, 40', laquelle est par la suite notée $\dot{h}$.

Dans l'exemple développé ci-après, la quantité $\dot{h}$ dépend des paramètres suivants : u$_1$, T.u$_1$, $\dot{u}_1$, $\dot{T}$ et w où $\dot{u}_1$ et $\dot{T}$ sont les dérivées temporelles du degré d'ouverture de la vanne 50, 50' et de la température en amont de cette vanne, respectivement. Ces paramètres apparaissent comme représentatifs des paramètres influant principalement sur le bilan de masse réalisé sur le séparateur de phase 40, 40'.

Dans cet exemple, l'influence de la pression P dans la fonction f n'est donc pas prise en considération.

Ce choix de paramètres pourrait être différent, en fonction de la précision souhaitée du modèle, notamment en y intégrant des paramètres liés à la pression P.

Selon un autre exemple, le modèle prendra en compte, afin de définir la quantité $\dot{h}$, les paramètres suivants : u$_1$, T, et leurs dérivées temporelles respectives, ainsi que la charge thermique w.

On cherche alors à exprimer l'équation (Eq. 1) sous une forme linéaire, soit sous la forme de (Eq. 2):

$$\dot{h} = \left(u_1, (Tu_1), \dot{u}_1, \dot{T}, w\right) \cdot \begin{pmatrix} a_1 \\ a_2 \\ a_3 \\ a_4 \\ a_5 \end{pmatrix}$$

où:a$_1$, a$_2$, a$_3$, a$_4$, a$_5$ sont des coefficients à déterminer.

L'équation (Eq. 2) peut s'écrire sous la forme de l'équation (Eq. 3):

$$\dot{h} = L_q q + L_z \dot{z} + a_5 w$$

compte tenu des notations suivantes :

$$q := \begin{pmatrix} u_1 \\ Tu_1 \end{pmatrix} \quad ; \quad z := \begin{pmatrix} u_1 \\ T \end{pmatrix} \quad ; \quad L_q = (a_1, a_2) \quad ; \quad L_z := (a_3, a_4)$$

Pour estimer la charge thermique w imposée au réfrigérateur 1, 1' cryogénique par l'installation, nous nous intéressons au filtrage de la dérivée temporelle $\dot{h}$ de la hauteur h de liquide de refroidissement dans le séparateur de phase, laquelle est exprimée dans le champ de Laplace.

Le filtrage permet d'éliminer tous les « bruits » qui sont susceptibles d'influer sur la détermination de la variable $\dot{h}$.

Ainsi, si l'on note H(s), la dérivée temporelle $\dot{h}$ de cette hauteur h dans le champ de Laplace et, Y(s) la fonction obtenue après filtrage du premier ordre de la quantité H(s), on peut exprimer, a *priori*, ce lien sous la forme de l'équation (Eq. 4) :

$$Y(s) = \frac{s}{1 + \tau_f s} H(s)$$

où $\tau_f$ est la constante de temps de ce filtre du premier ordre, qu'il faut définir.

Pour définir la constante de temps, on procède de la façon suivante. On impose un profil d'ouverture à la vanne 50, 50', par exemple un échelon. Puis, on suit l'évolution de la dérivée temporelle de la hauteur du bain de liquide. On est alors en mesure de déterminer la constante de temps, de façon classique pour un homme du métier.

L'équation (Eq. 4) correspond alors, dans le champ réel, à l'équation différentielle (Eq. 5) suivante :

$$\dot{y} = \frac{1}{\tau_f}\left[-y + \dot{h}\right]$$

où: $\dot{y}$ est la variable réelle associée à la fonction filtrée Y(s) dans le champ de Laplace de l'équation (Eq. 4) et y, la valeur réelle intégrée de la variable $\dot{y}$.

En insérant la relation fournie par l'équation (Eq. 3) issue du bilan de conservation de la masse effectué sur le séparateur de phase 40, 40' dans l'équation (Eq. 5) précédente, on obtient alors l'équation (Eq. 6) :

$$\dot{y} = \frac{1}{\tau_f}\left[-y + L_q q + L_z \dot{z} + a_5 w\right]$$

On comprend alors que cette équation différentielle traduit le bilan de conservation de la masse effectué sur le séparateur de phase, suite à un filtrage du premier ordre effectué sur la variable $\dot{h}$.

On introduit alors le vecteur d'état, $x_w$ sous la forme de l'égalité (Eq. 7) :

$$x_w := \tau_f \cdot y - L_z \cdot z$$

Cette notation permet alors d'écrire l'équation (Eq. 6) sous la forme de l'équation (Eq. 8) suivante :

$$\dot{x}_w = -y + L_q q + a_5 w$$

Puis, en remplaçant la variable y par la variable $\frac{1}{\tau_f}[x_w + L_z z]$, on obtient l'équation :

$$\dot{x}_w = -\frac{1}{\tau_f}[x_w + L_z z] + L_q q + a_5 w$$

ce qui donne finalement la représentation d'état suivante, (Eq. 9) :

$$\dot{x}_w = \left[\frac{-1}{\tau_f}\right]x_w + \left(L_q, \frac{-L_z}{\tau_f}\right)\begin{pmatrix} q \\ z \end{pmatrix} + a_5 w$$

$$y = \left[\frac{1}{\tau_f}\right]x_w + \left[\left(0, \frac{L_z}{\tau_f}\right)\right]\begin{pmatrix} q \\ z \end{pmatrix}$$

dont $x_w$ est l'état ; q, z et w les entrées et y la sortie.

Dans un souci de clarté de présentation, la représentation d'état (Eq. 9) peut encore s'exprimer sous la forme (Eq. 10) suivante :

$$\dot{x}_w \;=\; Ax_w + B \begin{pmatrix} q \\ z \end{pmatrix} + Gw$$

$$y \;=\; Cx_w + D \begin{pmatrix} q \\ z \end{pmatrix}$$

compte tenu des notations de matrices suivantes :

$$A = \left[\frac{-1}{\tau_f}\right] \;\; ; \;\; B = \left(L_q, \frac{-L_z}{\tau_f}\right) \;\; ; \;\; C = \left[\frac{1}{\tau_f}\right] \;\; ; \;\; D = \left[\left(0, \frac{L_z}{\tau_f}\right)\right] \;\; ; \;\; G = a_5$$

La représentation d'état (Eq. 9/Eq. 10) permet finalement d'exprimer la variable y, filtrée, représentative de la hauteur h du liquide de réfrigération dans le séparateur de phase, en fonction de q, z, w ainsi que des coefficients $a_1$, $a_2$, $a_3$, $a_4$, $a_5$ et $\tau_f$.

Cette représentation d'état est facilement implémentable dans un automate programmable.

Cette représentation d'état peut être étendue pour estimer la charge thermique imposée au réfrigérateur cryogénique.

Pour cela, on définit l'état étendu de la représentation d'état (Eq. 9), par la matrice suivante, (Eq. 11) :

$$\xi := \begin{pmatrix} x_w \\ s_w \end{pmatrix}$$

où le deuxième vecteur d'état $s_w$ représente la charge thermique w.

On exprime alors la représentation d'état (Eq. 10) sous la forme suivante, nommée (Eq. 12) :

$$\dot{\xi} \;:=\; \begin{pmatrix} \dot{x}_w \\ \dot{s}_w \end{pmatrix} = \underbrace{\begin{pmatrix} A & G \\ 0 & 0 \end{pmatrix}}_{\bar{A}} \begin{pmatrix} x_w \\ s_w \end{pmatrix} + \underbrace{\begin{pmatrix} B \\ 0_{1\times4} \end{pmatrix}}_{\bar{B}} \cdot \begin{pmatrix} q \\ z \end{pmatrix}$$

$$y \;=\; \underbrace{\begin{pmatrix} C & 0 \end{pmatrix}}_{\bar{C}} \xi + D \begin{pmatrix} q \\ z \end{pmatrix}$$

Cette représentation suppose que $\dot{s}_w = 0$, c'est-à-dire que la variable $s_w$, représentative de la charge thermique w imposée au réfrigérateur, présente un profil constant. Cette hypothèse est correcte lorsque la perturbation arrivant sur le bain de liquide se présente sous la forme d'échelons. Cela est notamment le cas pour un tokamak.

Bien entendu, d'autres hypothèses pourraient être avancées. Par exemple, on peut supposer que la perturbation arrive sous la forme d'une rampe ou d'une sinusoïde. Cela pourrait être le cas avec des réfrigérateurs cryogéniques, employés pour d'autres installations que le tokamak.

Si l'on note, (Eq. 13) :

$$\begin{pmatrix} q \\ z \end{pmatrix} := \begin{pmatrix} u_1 \\ Tu_1 \\ u_1 \\ T \end{pmatrix} =: U(T, u_1)$$

alors la représentation d'état de (Eq. 12) s'écrit sous la forme (Eq. 14) :

$$\begin{aligned} \dot{\xi} &= [\bar{A}] \cdot \xi + [\bar{B}] \cdot U(T, u_1) \\ y &= [\bar{C}] \cdot \xi + [D] \cdot U(T, u_1) \end{aligned}$$

Puis, si l'on note $A_d$ et $B_d$ les matrices discrètes représentatives des matrices $\overline{A}$ et $\overline{B}$ respectivement, pour une période d'échantillonnage $T_e$, les relations précédentes s'écrivent :

$$\begin{aligned} \xi^+ &= [A_d] \cdot \xi + [B_d] \cdot U(T, u_1) \\ y &= [\bar{C}] \cdot \xi + [D] \cdot U(T, u_1) \end{aligned}$$

où $\xi^+$ est la forme discrète de la matrice $\xi$.

On rappelle que lorsque l'on connaît les matrices continues d'une représentation d'état A, B, C, D, les matrices discrètes associées $A_d$, $B_d$, $C_d$ et $D_d$ s'écrivent :

$A_d = e^{A.T_e}$ avec $T_e$ la période d'échantillonnage ; $B_d = \int_0^{T_e} e^{A.s} . B.ds$ ; $C_d = C$ et $D_d = D$.

Les relations exprimant $\xi^+$ et y peuvent s'écrire sous une forme réduite.

Pour cela, on rappelle l'équation de l'observateur:

$$\hat{\xi}^+ = A_d \hat{\xi} + B_d U + L\left( y - \hat{y} \right).$$

où L est une matrice colonne à deux lignes à valeurs réelles, nommé gain de l'observateur. Le gain de l'observateur dépend uniquement du temps de réponse tr choisi pour l'observateur.

Puis, on utilise la relation exprimant y pour la variable $\hat{y}$. Dans ce cas, $\hat{y}$ s'écrit:

$$\hat{y} = [\bar{C}] \cdot \hat{\xi} + [D] \cdot U(T, u_1).$$

En remplaçant cette dernière expression dans l'équation de l'observateur, on aboutit finalement à la forme réduite mentionnée ci-dessus, à savoir l'équation (Eq. 15) :

$$\hat{\xi}^+ = [A_d - L\bar{C}] \cdot \hat{\xi} + [B_d - LD] \cdot U(T, u_1) + L \cdot y$$

dans laquelle le gain de l'observateur L est choisi pour que les valeurs propres de la matrice $A_d$ - $L\overline{C}$ soient à parties réelles strictement négatives. Comme l'homme du métier peut le comprendre aisément, les valeurs propres de la matrice $A_d$ - $L\overline{C}$ correspondent aux pôles de la fonction de transfert correspondante.

Ces pôles sont notamment liés à la constante de temps $\tau_f$, dans la mesure où ce paramètre intervient dans l'expression de cette matrice. Par suite, ces pôles sont liés au temps de réponse $t_r$ choisi pour l'observateur.

Il faut cependant noter que la variable y n'est pas disponible dans l'équation (Eq. 15). Il faut donc la déterminer par ailleurs. Pour cela, on revient à l'équation différentielle (Eq. 5), à savoir :

$$\dot{y} = \frac{1}{\tau_f}\Big[-y + h\Big]$$

Puis, on définit le vecteur :

$$\eta := \tau_f \cdot y - h$$

et on réécrit l'équation (Eq. 5) sous la forme suivante :

$$\dot{\eta} \;=\; -y = \frac{-1}{\tau_f}[\eta + h]$$

$$y \;=\; \frac{1}{\tau_f}\Big[\eta + h\Big]$$

que l'on peut exprimer sous la forme de la représentation d'état suivante :

$$\dot{\eta} \;=\; [-1/\tau_f] \cdot \eta + [-1/\tau_f] \cdot h$$

$$y \;=\; [1/\tau_f] \cdot \eta + [1/\tau_f] \cdot h$$

Cette représentation d'état peut alors être exprimée de façon discrète, pour une période d'échantillonnage $T_e$ sous la forme suivante (Eq. 16):

$$\eta^+ \;=\; [R_d] \cdot \eta + [E_d] \cdot h$$

$$y \;=\; [\frac{1}{\tau_f}] \cdot \eta + [\frac{1}{\tau_f}] \cdot h$$

où $\eta^+$ est la forme discrète de la variable $\dot{\eta}$, les matrices $[R_d]$ et $[E_d]$ étant les matrices discrètes de la représentation d'état de l'équation (Eq. 5). La détermination de ces matrices est réalisée en fonction des matrices continues $[R] = [-1/\tau_f]$ et $E = [-1/\tau_f]$, par les relations :

$R_d = e^{R.Te}$ avec $T_e$ la période d'échantillonnage ; $E_d = \int_0^{T_e} e^{R.s}.E.ds$ .

En regroupant alors les équations (Eq. 15) et (Eq. 16), on peut écrire un ensemble (Eq. 17) d'équations:

$$\eta^+ = [R_d] \cdot \eta + [E_d] \cdot h$$

$$\hat{\xi}^+ = [A_d - L\bar{C}] \cdot \hat{\xi} + [B_d - LD] \cdot U(T, u_1) + L \cdot \left( [\frac{1}{\tau_f}] \cdot \eta + [\frac{1}{\tau_f}] \cdot h \right)$$

$$\hat{w} = (0, 1) \hat{\xi}$$

Cet ensemble d'équations peut être exprimé sous la forme suivante, (Eq. 18) :

$$X^+ = \begin{pmatrix} R_d & 0_{1\times 2} \\ \frac{1}{\tau_f}L & A_d - L\bar{C} \end{pmatrix} X + \begin{pmatrix} 0_{1\times 4} & E_d \\ B_d - LD & \frac{1}{\tau_f}L \end{pmatrix} \begin{pmatrix} U(T, u_1) \\ h \end{pmatrix}$$

$$\hat{w} = (0, 0, 1) X$$

considérant la notation :

$$X := \begin{pmatrix} \eta \\ \hat{\xi} \end{pmatrix}$$

ou, plus simplement, (Eq. 19) :

$$X^+ = A_{obs}X + B_{obs}U_{obs}(T, u_1, h)$$

$$\hat{w} = C_{obs}X$$

avec les matrices suivantes :

$$A_{obs} = \begin{pmatrix} R_d & 0_{1\times 2} \\ \frac{1}{\tau_f}L & A_d - L\bar{C} \end{pmatrix}$$

$$B_{obs} = \begin{pmatrix} 0_{1\times4} & E_d \\ B_d - LD & \frac{1}{\tau_f}L \end{pmatrix}$$

$$C_{obs} = (0,0,1),$$

et

$$U_{obs}(T, u_1, h) = \begin{pmatrix} u_1 \\ T u_1 \\ u_1 \\ T \\ h \end{pmatrix}$$

L'équation (Eq.19) permet ainsi d'estimer la charge thermique w imposée au réfrigérateur, sous une forme aisément implémentable dans un automate programmable.

La charge thermique w ne peut cependant être estimée à partir de (Eq. 19), qu'à partir du moment où les matrices $A_{obs}$ et Bobs sont parfaitement déterminées, ce qui revient à identifier les coefficients $a_1$ à $a_5$, déterminer les valeurs de la matrice L et choisir la constante de temps $\tau_f$ du filtre de premier ordre choisi.

L'identification des coefficients $a_1$ à $a_5$ s'effectue de la façon suivante.

On intègre l'équation (Eq. 2) entre un temps de référence $t_1$ et le temps t, puis on filtre.

L'intégration aboutit à l'équation (Eq. 20) : $h(t) - h(t_1) = M(t)^* \alpha$ où M(t) est la matrice ligne donnée par :

$$M(t) = \begin{pmatrix} \int_{t_1}^{t} u(\tau)d\tau & \int_{t_1}^{t} T(\tau)u_1(\tau)d\tau & u_1(t) - u(t_1) & T(t) - T(t_1) & \int_{t_1}^{t} w(\tau)d\tau \end{pmatrix}$$

et,

a le vecteur colonne des coefficients $a_1$ à $a_5$.

Le filtrage de l'équation (Eq. 20) est ensuite réalisé avec le filtre suivant :

$$\mathcal{F}(s) = \frac{s}{1 + \tau_f s}$$

Les coefficients $a_1$ à $a_5$ sont alors déterminés en minimisant, par la méthode des moindres carrés, les relations formant un système d'équations (Eq. 21) dont les inconnus sont les coefficients de la matrice a:

$$\left\| \begin{pmatrix} \mathcal{F}(M)(t_1) \\ \mathcal{F}(M)(t_2) \\ \vdots \\ \mathcal{F}(M)(t_N) \end{pmatrix} \cdot a - \begin{pmatrix} 0 \\ \mathcal{F}(h)(t_2) - h(t_1) \\ \vdots \\ \mathcal{F}(h)(t_N) - h(t_1) \end{pmatrix} \right\|$$

laquelle permet de résoudre l'équation (Eq. 20) sous forme filtrée, entre le temps $t_1$ initial et le temps final $t_N$, avec N = 5 dans le cas d'espèce.

Pour ce faire, il est nécessaire de mesurer les valeurs des coefficients des autres matrices.

Ces mesures ont été effectuées sur le réfrigérateur 1' représenté schématiquement sur la figure 4.

Ce réfrigérateur 1' est similaire au réfrigérateur 1 décrit à l'appui de la figure 1, notamment au niveau du séparateur de phase 40'. Ce réfrigérateur 1' diffère cependant légèrement du réfrigérateur décrit à l'appui de la figure 1 par différents aspects.

En effet, il ne comporte que quatre échangeurs thermiques 20', 21', 22', 23' pour baisser la température du fluide de refroidissement, en l'occurrence de l'hélium, de 300K à 4,5K. La pression fournie par le compresseur est de 16 bar. Par ailleurs, une seule turbine 31' est prévue et un échangeur thermique 60' additionnel (azote, 80K) est prévu au niveau du premier échangeur thermique 20'.

Les coefficients de la matrice a ont été calculés pour une pression P en sortie du compresseur de 16 bar. Par ailleurs, la température en amont de cette vanne 50' est de T = 7K. Le temps $t_1$ considéré est $t_1$ = 1s, à partir duquel les données sont enregistrées. La période considérée pour la prise des mesures est de 3s, si bien que dt = $t_{i+1}$ - $t_i$ = 3s, pour i variant de 1 à N.

Dans ces conditions, la résolution du système d'équations (Eq. 21) permet d'aboutir aux coefficients du tableau 1 suivant :

Tableau 1

| Coefficients de la matrice a | valeur |
| --- | --- |
| $a_1$ | 0,003710768747845 |
| $a_2$ | -0,000396506514909 |
| $a_3$ | 0,024617305832635 |
| $a_4$ | 0,286747643082885 |
| $a_5$ | -0,000240828045189 |

Une fois les coefficients $a_1$ à $a_5$ obtenus, ceux-ci sont entrés dans le programme, tout comme la constante de temps $\tau_f$ et les coefficients du gain de l'observateur L.

Un temps de réponse à 5%, noté tr5%, a été choisi pour l'observation. Dans le cas d'espèce, il vaut *tr*5% = 60s. Cela signifie que l'observateur est calé afin d'obtenir une estimation à 5% de la charge thermique w, en 60s.

La constante de temps $\tau_f$ est déterminée par la relation *tr*5% = 3$\tau_f$. Ainsi, la constante de temps $\tau_f$ vaut $\tau_f$ = 20s.

Par ailleurs, pour déterminer les valeurs propres de la matrice $A_d$ - $L\overline{C}$, on détermine les pôles z de la fonction de transfert correspondante, soit $z = e^{-\frac{3.dt}{tr5\%}} = \begin{pmatrix} 0.8607 \\ 0.8607 \end{pmatrix}$ dans la mesure où dt = 3s comme mentionné précédemment.

Ces données permettent de définir notamment les matrices $A_{obs}$ et $B_{obs}$.

L'estimation de la charge thermique w avec ce programme peut alors être réalisée avec le système d'équations (Eq. 19).

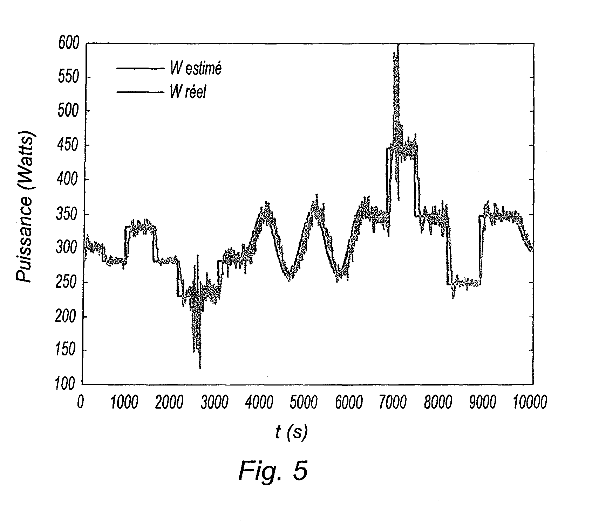

La figure 5 représente l'estimation de la charge thermique obtenue par le programme décrit ci-dessus de l'évolution réelle de la charge thermique imposée au réfrigérateur représenté sur la figure 4.

Comme on peut le constater sur cette figure 5, bien que la charge thermique imposée au réfrigérateur 1' soit fortement instationnaire, et même aléatoire, l'estimation est de très bonne qualité. L'estimation suit l'évolution réelle de la charge thermique lors des pics de puissance.

Cette estimation est également très bonne en régime permanent, par exemple entre le temps t = 0s et le temps t = 3.10^4 s sur la figure 5.

Finalement, il est possible d'estimer correctement, en temps réel, l'évolution de la charge thermique imposée au réfrigérateur cryogénique.

Cette estimation est très bonne que le régime de fonctionnement soit permanent ou instationnaire.

Ceci est particulièrement intéressant, car il est alors possible d'effectuer une régulation d'un ou de plusieurs paramètres(s) de fonctionnement du réfrigérateur cryogénique.

On peut par exemple imaginer de réguler la température en sortie de la turbine 31', la hauteur du bain de liquide dans le séparateur ou d'autres paramètres.

Considérant l'exemple ci-dessus, on peut alors physiquement agir sur les variables tels que l'ouverture de la vanne, la température et/ou la pression en amont de cette vanne etc..., afin de réguler le ou chaque paramètre de fonctionnement considéré.

En particulier, dans le cas des régimes pulsés d'un tokamak, il est possible d'estimer en temps réel la valeur de la charge thermique imposée au réfrigérateur cryogénique, sans savoir ce qui se passe à l'extérieur du réfrigérateur.

Cette régulation permet alors d'assurer un refroidissement adéquat de l'installation, sans risque de provoquer un arrêt du réfrigérateur et par suite, un arrêt de l'installation elle-même.

Cette régulation est peu coûteuse, car elle ne nécessite aucun matériel important.

Il faut noter que l'identification des coefficients de la matrice a est valable pour le réfrigérateur 1' représenté sur la figure 4, compte tenu des paramètres choisis dans l'équation (Eq. 2).

Une autre identification des valeurs de la matrice a serait nécessaire si d'autres paramètres étaient choisis pour élaborer l'équation (Eq. 2). Par exemple, si l'on souhaite avoir un modèle encore plus précis, il est envisageable de prendre en compte, en outre, la pression P en amont de la vanne 50' ainsi que la dérivée temporelle de cette pression P.

Une autre identification des valeurs de la matrice a serait également nécessaire pour ce même réfrigérateur fonctionnant dans des conditions différentes, par exemple si la pression en sortie du compresseur diffère.

**Revendications**

1. Procédé de régulation d'un réfrigérateur (1, 1') cryogénique, soumis à une charge thermique, comprenant un séparateur de phase (40, 40') comportant un bain (41, 41') de liquide frigorifique, **caractérisé en ce que** ledit procédé comprend les étapes suivantes :

   - estimer la charge thermique imposée au réfrigérateur (1,1') avec un programme mis en oeuvre par ordinateur, ledit programme étant basé sur un bilan de masse effectué sur le séparateur de phase (40, 40') permettant d'exprimer l'évolution de la dérivée temporelle de la hauteur du bain de liquide frigorifique dans le séparateur de phase ;
   - réguler au moins un paramètre de fonctionnement du réfrigérateur, en fonction de la valeur de la charge thermique préalablement estimée.

2. Procédé selon la revendication 1, dans lequel la charge thermique imposée au réfrigérateur (1, 1') cryogénique est une charge thermique instationnaire.

3. Procédé selon la revendication précédente, dans lequel la charge thermique instationnaire imposée au réfrigérateur (1, 1') cryogénique est pulsée.

4. Procédé selon l'une des revendications précédentes, dans lequel il est prévu une étape de détermination des variables pertinentes du réfrigérateur cryogénique (1, 1') représentant l'évolution de la dérivée temporelle de la hauteur du bain (41, 41') de liquide frigorifique dans le séparateur de phase (40, 40'), préalablement à l'étape d'estimation de la charge thermique avec le programme mis en oeuvre par ordinateur.

5. Procédé selon la revendication précédente, dans lequel, le réfrigérateur cryogénique (1, 1') comprenant une vanne (50, 50') à l'entrée du séparateur de phase (40, 40'), lesdites variables pertinentes comprennent au moins le degré d'ouverture de la vanne, la température en amont de la vanne et leurs dérivées temporelles respectives ainsi que la charge thermique.

6. Procédé selon l'une des revendications 4 ou 5, dans lequel le programme mis en oeuvre par ordinateur comprend une étape dans laquelle on filtre les données relatives à l'évolution de la dérivée temporelle de la hauteur du bain (41, 41') de liquide frigorifique dans le séparateur de phase (40, 40').

7. Procédé selon l'une des revendications 5 ou 6, dans lequel l'étape de régulation est réalisée en modifiant le degré d'ouverture de la vanne (50, 50') du réfrigérateur (1, 1'), située à l'entrée du séparateur de phase (40, 40').

**Patentansprüche**

1. Verfahren zur Regelung eines einer thermischen Last ausgesetzten Kryokühlgeräts (1, 1'), welches einen Farbenseparator (40, 40') mit einem Kühlflüssigkeitsbad (41, 41') aufweist, **dadurch gekennzeichnet, dass** das Verfahren die folgenden Schritte umfasst:

   - Schätzen der auf das Kühlgerät (1, 1') ausgeübten thermischen Last mit einem von einem Rechner eingesetzten Programm, wobei das Programm auf einer auf den Phasenseparator (40, 40') angewendeten Massenbilanz basiert, welche es ermöglicht, die Entwicklung der zeitlichen Ableitung des Stands des Kühlflüssigkeitsbades in dem Phasenseparator auszudrücken;

- Regeln wenigstens eines Betriebsparameters des Kühlgeräts in Abhängigkeit von dem Wert der zuvor geschätzten thermischen Last.

2. Verfahren nach Anspruch 1, wobei die auf das Kryokühlgerät (1, 1') ausgeübte thermische Last eine nicht stationäre thermische Last ist.

3. Verfahren nach dem vorhergehenden Anspruch, wobei die auf das Kryokühlgerät (1, 1') ausgeübte nicht stationäre thermische Last gepulst ist.

4. Verfahren nach einem der vorhergehenden Ansprüche, wobei ein Schritt einer Bestimmung von einschlägigen Variablen des Kryokühlgeräts (1, 1'), welche die Entwicklung der zeitlichen Ableitung des Stands des Kühlflüssigkeitsbades (41, 41') in den Phasenseparator (40, 40') darstellen, vor dem Schritt einer Bestimmung der thermischen Last mit dem von einem Rechner eingesetzten Programm vorgesehen ist.

5. Verfahren nach dem vorhergehenden Anspruch, wobei das Kryokühlgerät (1, 1') ein Ventil (50, 50') an dem Eingang des Phasenseparators (40, 40') umfasst, wobei die einschlägigen Variablen wenigstens den Öffnungsgrad des Ventils, die Temperatur vorgelagert dem Ventil und ihre jeweiligen zeitlichen Ableitungen sowie die thermische Last umfassen.

6. Verfahren nach einem der Ansprüche 4 oder 5, wobei das von einem Rechner eingesetzte Programm einen Schritt umfasst, in welchem die Daten bezüglich der Entwicklung der zeitlichen Ableitung des Stands des Kühlmittelbades (41, 41') in dem Phasenseparator (40, 40') gefiltert werden.

7. Verfahren nach einem der Ansprüche 5 oder 6, wobei der Schritt einer Regelung realisiert wird, indem der Öffnungsgrad des Ventils (50, 50') des Kühlgeräts (1, 1'), welches sich an dem Eingang des Phasenseparators (40, 40') befindet, modifiziert wird.

**Claims**

1. A method for regulating a cryogenic refrigerator (1, 1'), subjected to a thermal load, comprising a phase separator (40, 40') containing a bath (41, 41') of liquid refrigerant, **characterized in that** said method comprises the following steps:

- estimating the thermal load applied to the thermal refrigerator using a computer program, said program being based on a mass balance performed on the phase separator (40, 40') allowing the variation in the time derivative of the height of the bath of liquid refrigerant in the phase separator to be expressed;
- regulating at least one operating parameter of the refrigerator, depending on the value of the thermal load estimated beforehand.

2. The method as claimed in claim 1, in which the thermal load applied to the cryogenic refrigerator (1, 1') is a variable thermal load.

3. The method as claimed in one of the preceding claims, in which the variable thermal load applied to the cryogenic refrigerator (1, 1') is pulsed.

4. The method as claimed in one of the preceding claims, in which a step is provided for determining appropriate variables of the cryogenic refrigerator (1, 1'), representing the variation in the time derivative of the height of the bath (41, 41') of liquid refrigerant in the phase separator (40, 40'), before the step of estimating the thermal load using the computer program.

5. The method as claimed in the preceding claim, in which, the cryogenic refrigerator (1, 1') comprising a valve (50, 50') at the inlet of the phase separator (40, 40'), said appropriate variables comprise at least the degree of opening of the valve, the temperature upstream of the valve and their respective time derivatives, and the thermal load.

6. The method as claimed in either one of claims 4 and 5, in which the computer program comprises a step in which the data relating to the variation in the time derivative of the height of the bath (41, 41') of liquid refrigerant in the phase separator (40, 40') are filtered.

7. The method as claimed in either one of claims 5 and 6, in which the regulating step is implemented by modifying the degree of opening of the valve (50, 50') of the refrigerator (1, 1'), said valve being located at the inlet of the phase separator (40, 40').

Fig. 1

Fig. 2

Fig. 3

Fig. 4

*Fig. 5*

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009024705 A

**Littérature non-brevet citée dans la description**

- Advances in Cryogenic Engineering : Transactions of the Cryogenic Engineering Conference. **DAUGUET.** CEC. vol. 53, 564-569

- **CLAUDET.** Design of the ITER-FEA T cryoplant to achieve stable operation over a wide range of experimental parameters and operation scenarios. *Fusion Engineering and Design,* 2001, vol. 58-59, 205-209